# FASCICULE DE BREVET EUROPEEN

(11) **EP 2 137 065 B1**
(45) Date de publication et mention de la délivrance du brevet: **02.05.2012**
(21) Numéro de dépôt: 08788184.3
(22) Date de dépôt: 15.04.2008
(51) Int. Cl.: B64C 1/26

(54) **DISPOSITIF DE FIXATION D'UN ORGANE DE SUSTENTATION AU FUSELAGE D'UN AVION**
VORRICHTUNG ZUR ANBRINGUNG EINES TRAGWERKS AN EINEM FLUGZEUGRUMPF
DEVICE FOR ATTACHING A LIFT MEMBER TO THE FUSELAGE OF AN AIRCRAFT

(30) Priorité: 17.04.2007 FR 0754529
(43) Date de publication de la demande: 30.12.2009
(73) Titulaire: AIRBUS OPERATIONS (S.A.S), 31060 Toulouse (FR)
(72) Inventeur: GALLANT, Guillaume, F-31480 Laréole (FR)
(74) Mandataire: Lotaut, Yacine Diaw
(86) Numéro de dépôt international: PCT/FR2008/050668
(87) Numéro de publication internationale: WO 2008/145892

(56) Documents cités:
- EP-A- 0 483 049
- CA-A1- 2 121 823
- FR-A- 801 893
- FR-A- 859 103
- FR-A- 2 645 930
- US-A- 4 390 153

## Description

L'invention concerne une liaison entre au moins un organe de sustentation et un fuselage d'avion. Par organe de sustentation, on entend une surface de portance, telle que la voilure ou un empennage horizontal de l'avion. Plus précisément, l'invention concerne un dispositif de fixation d'un tel organe de sustentation à la structure fuselage de l'avion.

En vol, l'avion est soumis à différentes contraintes aérodynamiques ayant des répercussions tant sur la voilure que sur le fuselage et la liaison entre ces deux éléments. Par exemple, en vol la voilure tend à fléchir sous la charge verticale ce qui comprime les flancs du fuselage. De même, des efforts de compression et de traction sont appliqués sur la voilure entraînant un allongement de l'intrados et un raccourcissement de l'extrados de ladite voilure, imposant une déformation similaire du caisson central de voilure contenu en partie basse du fuselage. La liaison entre la voilure et le fuselage de l'avion doit également supporter des efforts dus au braquage de la voilure, à la charge latérale du moteur lors du braquage de la voilure, aux forces découlant du moment de flexion de la voilure, de la charge aérodynamique et des forces de cisaillement de la voilure. De même, la liaison entre la voilure et le fuselage doit supporter les déformations dues à la pression et à la compression des parois latérales du fuselage déformant l'ensemble du volume du fuselage.

Actuellement on connaît différents dispositifs de fixation permettant de relier la voilure au fuselage, tenant compte des contraintes mécaniques et de fabrication d'un avion.

Par exemple, dans le cas d'une voilure située en partie basse du tronçon central du fuselage, il est connu d'utiliser une jonction type croix et té. Pour cela, le fuselage intègre le caisson central de voilure dans son volume interne puis, chaque demi-voilure est rapportée latéralement sur les parois droite ou gauche du caisson central de voilure, pour y être fixée. La croix horizontale permet de lier les panneaux extrados du caisson central et de la voilure tandis que le té horizontal permet de relier les panneaux intrados du caisson central et de la voilure. Le fuselage est principalement relié au caisson central de voilure par la croix horizontale et par les cadres. Un tel dispositif de fixation complexifie de manière importante la fabrication du fuselage notamment dans sa partie centrale. En effet, il est nécessaire d'adapter la structure du fuselage afin que ledit fuselage soit compatible avec les déplacements entre le fuselage et la voilure lors de certaines manoeuvres. De plus, la fixation des demi-voilures est très complexe et fait appel à de nombreuses fixations pour couturer tous les panneaux intrados/extrados entre eux.

Il est également connu de fixer la voilure en partie haute du fuselage par l'intermédiaire de jonction type « chapes ». Une telle voilure est réalisée d'un seul tenant pour être, une fois terminée, rapportée en partie haute du fuselage lui-même terminé. La masse d'un tel assemblage n'est pas optimisée pour deux raisons principales, à savoir que l'introduction des charges est localisée et que le nombre de pièces est important. Par ailleurs, un tel dispositif est difficilement applicable sans pénalité de masse à un avion comportant une aile basse en flèche pour lequel, dans certains cas de vol dimensionnant pour la structure, il y a une concentration des efforts sur le longeron arrière de la voilure.

Il est également connu d'utiliser des jonctions par boulons de traction. Cependant, de telles jonctions ne sont pas satisfaisantes car elles ne permettent pas une transmission des efforts de torsions de voilure au fuselage optimisée.

Il est également connu de fixer la voiture au fuselage moyennant des articulations élastiques. Un exemple de cet agencement est montré dans le document FR-A-801893.

Dans l'invention, on cherche réaliser une jonction entre le fuselage et une surface de portance d'un avion simplifiée par rapport aux jonctions actuellement utilisées, afin de faciliter l'assemblage entre le fuselage et ladite surface de portance. L'assemblage selon l'invention est plus rapide et plus simple que ceux de l'état de la technique, ce qui permet notamment de réduire les coûts de fabrication d'un avion.

Pour cela, dans l'invention, on fixe la surface de portance au corps du fuselage par l'intermédiaire d'attaches mécaniquement souples dans la direction Y, mais rigides dans les directions X et Z. Par directions X, Y et Z, on entend par rapport au repère avion, ou X est l'axe longitudinal du fuselage de l'avion, Y l'axe transversal et Z l'axe vertical. Plus précisément, on utilise des articulations élastiques, telles que celles fabriquées par la société HUTCHINSON, particulièrement adaptées pour relier la voilure au fuselage d'un avion, puisque la jonction obtenue est destinée à être soumise à des mouvements d'oscillation et de rotation de faibles amplitudes. Une liaison élastique se compose de manière classique de deux tubes concentriques entre lesquels est intercalé un anneau en élastomère pré-comprimé. Les liaisons élastiques sont avantageusement paramétrables, de manière à adapter la rigidité en rotation et en translation aux caractéristiques mécaniques que la liaison qu'on souhaite réaliser doit avoir, notamment en modifiant l'épaisseur de la couche d'élastomère et/ou en ajoutant des lamelles intermédiaires entre les tubes concentriques. Lamifier une articulation élastique contribue également à diminuer le taux de travail de l'élastomère sous de forte charges radiales. Par exemple, on peut disposer les liaisons élastiques de manière à ce que l'axe longitudinale desdites liaisons s'étendent selon l'axe Y afin d'autoriser les mouvements de translation en Y. Préférentiellement, on utilise des articulations élastiques de type lamifiées, c'est-à-dire comportant au moins une lamelle intermédiaire dans la masse en élastomère, de manière à augmenter la rigidité de l'articulation dans le plan XZ, afin de limiter tout déplacement dans le plan radial, en conservant sensiblement la même souplesse en torsion. Ainsi, dans le cas de la jonction entre la voilure et le fuselage, on paramètre les attaches, ou articulations élastiques, de manière à autoriser une faible rotation en X et une rotation encore plus faible en Z. La voilure peut ainsi fléchir, ce qui permet un resserrement des attaches en Y permettant une indépendance de mouvements entre la voilure et le corps du fuselage. Avec le dispositif de fixation de l'invention, la voilure peut avantageusement être réalisée d'un seul tenant, qu'elle soit destinée à être fixée en partie haute ou en partie basse du fuselage. Par d'un seul tenant, on entend que les ailes sont fixées au caisson central de voilure avant de fixer l'ensemble au fuselage. Dans le cas de la jonction entre le fuselage et un empennage vertical, on paramètre les liaisons élastiques de manière à autoriser une rotation autour de l'axe Y et à limiter la rotation autour des axes X et Z. Par ailleurs, du fait de l'élasticité des attaches, l'assemblage est plus simple et plus tolérant, ce qui participe à l'augmentation de la durée de vie de l'avion.

L'invention a donc pour objet un avion, caractérisé en ce qu'il est muni d'au moins un dispositif de fixation d'un organe de sustentation au fuselage comportant des articulations élastiques dont la rigidité en translation et en rotation est paramétrable axialement, radialement et transversalement.

Selon des exemples de réalisation de l'invention, il est possible de prévoir tout ou partie des caractéristiques supplémentaires suivantes :
- Les articulations élastiques sont des articulations lamifiées ;
- les articulations sont orientées de manière à ce que l'axe longitudinal desdites articulations s'étende transversalement par rapport à l'axe longitudinal de l'avion ;
- l'organe de sustentation est la voilure de l'avion ;
- des articulations élastiques relient les flancs droit et gauche du fuselage respectivement aux ailes droite et gauche de la voilure ;
- la voilure est en position basse sur le fuselage ;
- des articulations élastiques relient une poutre longitudinale centrale du fuselage au caisson central de la voilure ;
- la voilure est en position haute sur le fuselage ;
- la voilure est monobloc, c'est-à-dire que les ailes et le caisson central de voilure sont réalisés d'un seul tenant avant d'être fixés au fuselage ;
- l'organe de sustentation est un empennage horizontal dudit avion.

L'invention sera mieux comprise à la lecture de la description qui suit et à l'examen des figures qui l'accompagnent. Celles-ci sont présentées à titre indicatif et nullement limitatif de l'invention. Les figures représentent :
- figure 1 : une représentation isométrique d'une articulation élastique lamifiée pouvant être utilisée dans le dispositif de fixation de l'invention ;
- figure 2 : une représentation isométrique d'une section centrale de fuselage avec voilure en position basse ;
- figures 3 et 4 : un premier exemple de fixation selon l'invention entre une voilure et une section centrale de fuselage ;
- figure 5 : un second exemple de fixation selon l'invention entre une voilure et une section centrale de fuselage ;
- figures 6 et 7 : des agrandissements d'une articulation élastique au niveau de la jonction entre la voilure et le fuselage d'un avion selon l'invention.

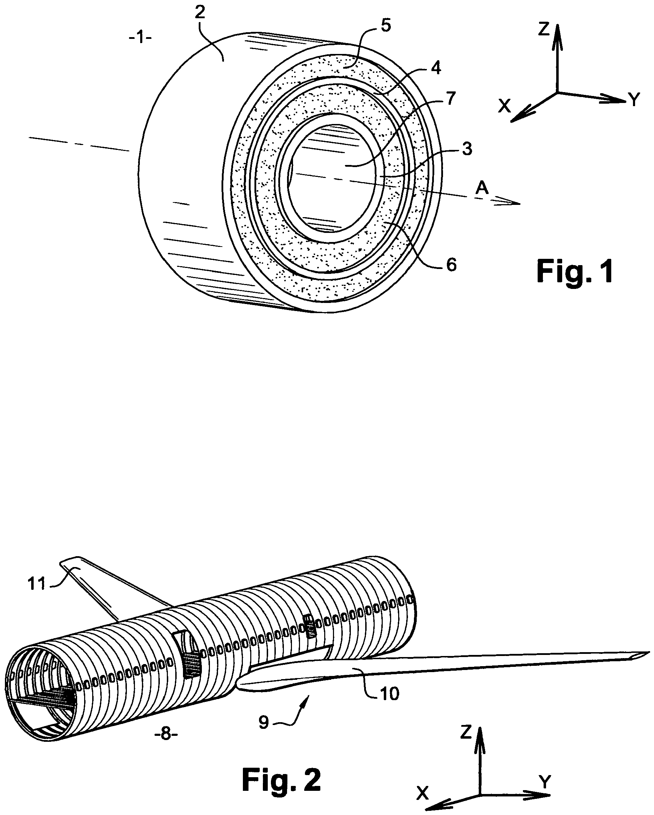

Sur la figure 1 est représentée un exemple de jonction élastique 1 pouvant être utilisée dans le dispositif de fixation selon l'invention.

La jonction élastique 1 comporte une bague extérieure 2, une bague intérieure 3 et une lamelle 4 intercalée entre les deux bagues 2, 3, de manière à former trois tubes concentriques. Une première couche d'élastomère 5 s'étend entre la bague extérieure 2 et la lamelle 4, une deuxième couche d'élastomère 6 s'étendant entre la lamelle intermédiaire 4 et la bague intérieure 3. Bien entendu il est également possible, selon les besoins, d'utiliser une articulation élastique 1 dépourvue de lamelle 4 ou comportant plusieurs lamelles 4 intercalées entre la bague extérieure 2 et la bague intérieure 3.

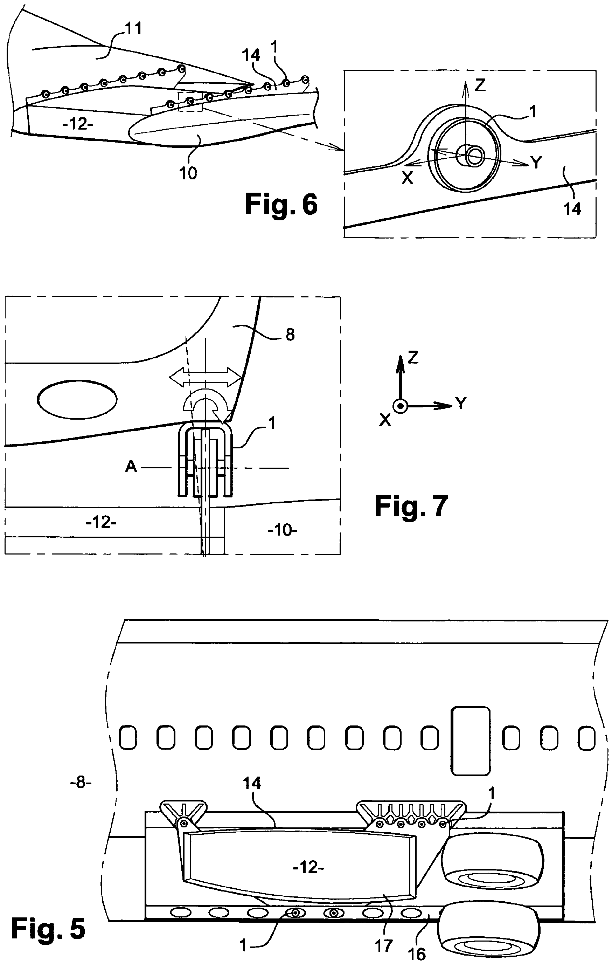

Avantageusement, comme cela est représenté sur les figures 6 et 7, les liaisons articulées 1 sont orientées dans le dispositif de fixation de manière à ce que l'axe longitudinal A de l'articulation élastique 1 s'étende selon l'axe Y du repère avion, de manière à ce que la jonction articulée obtenue entre l'organe de sustentation et le fuselage puisse autoriser une légère translation en Y, une légère rotation en X et être sensiblement immobile en Z (figure 7).

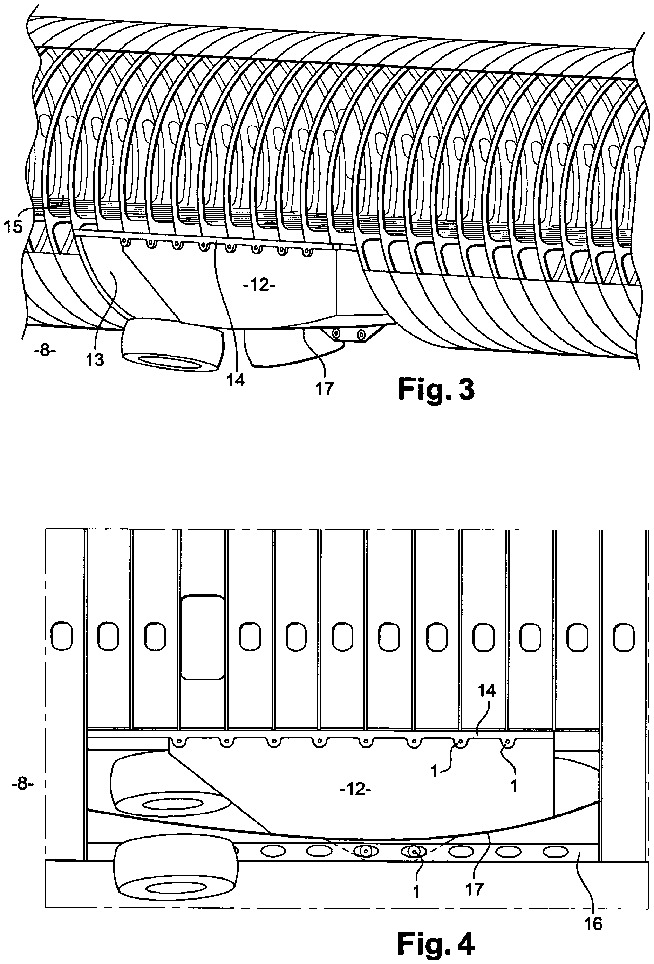

Sur la figure 2 est représentée un tronçon de fuselage 8 au niveau de la liaison à la voilure 9, ladite voilure étant fixée en partie basse du tronçon de fuselage 8. La voilure 9 comporte deux ailes 10 et 11 et un caisson central 12 (visible sur les figures 3 et 4). Comme cela sera expliqué plus en détail par la suite, la voilure 9 peut, dans le cas où elle est fixée au tronçon 8 par le dispositif de fixation selon l'invention, être réalisée d'un seul tenant avant d'être fixée au tronçon 9.

Sur les figures 3 et 4, pour faciliter la visibilité, les ailes 10 et 11 n'ont pas été représentées. La figure 3 représente la section centrale de fuselage 8 et le caisson central de voilure 12 vus de côté, la figure 4 une vue de dessous.

Avantageusement, on fabrique entièrement la voilure 9, c'est-à-dire en fixant les ailes 10 et 11 sur les parois latérales du caisson central de voilure 12, avant de poser la section centrale de fuselage 8 sur ladite voilure 9, afin de loger le caisson central de voilure 12 dans un évidement 13 ménagé en partie basse de la section centrale de fuselage 8. On fixe alors un rebord latéral supérieur 14 du caisson central de voilure 12 à la paroi latérale 15 correspondante de la section centrale 8 du fuselage au moyen d'une pluralité d'articulations élastiques 1. Les articulations élastiques 1 sont disposées en une rangée longitudinale unique, chaque articulation élastique étant disposée de manière à ce que son axe longitudinal s'étende transversalement à l'axe longitudinal du fuselage. Bien entendu, il est possible de prévoir plusieurs rangées longitudinales d'articulations élastiques 1 disposées les unes sous les autres. De même, la rangée d'articulations élastiques 1 peut être continue, c'est-à-dire que les articulations élastiques sont disposées régulièrement sur toute la longueur de la paroi latérale supérieure 14 du caisson central de voilure 12 (figures 3, 4). Par longueur on entend la dimension du caisson central de voilure 12 s'étendant parallèlement à l'axe longitudinal du fuselage. A l'inverse, la rangée d'articulations élastiques 1 peut être interrompue, comme cela est représenté à la figure 5. Dans ce second exemple de réalisation, les articulations élastiques 1 sont concentrées en partie avant et arrière du rebord latéral supérieur 14 du caisson central de voilure 12. Par avant et arrière, on entend par rapport au sens d'avancement de l'avion. On diminue ainsi le nombre total d'articulations élastiques 1, ce qui diminue la masse totale du dispositif de fixation, en concentrant lesdites articulations élastiques 1 aux niveaux des zones travaillantes de la jonction voilure/fuselage.

Une fois le rebord latéral supérieur 14 du caisson central de voilure 12 fixé à la paroi latérale 15 du fuselage 8, on amène une poutre ventrale 16 sous le caisson central de voilure 12, de manière à refermer le logement 13. La poutre ventrale 16 est une poutre longitudinale s'étendant parallèlement à l'axe longitudinal du fuselage 8. Un rebord latéral inférieur 17 du caisson central de voilure 12 est fixé à la poutre ventrale centrale 16 par l'intermédiaire de deux articulations élastiques 1. Bien entendu, on peut utiliser un nombre plus important de jonctions élastiques 1. La reprise des efforts voilure au niveau du fuselage 8 se fait par le biais de trois zones de transfert, deux étant situées sur les flancs du fuselage 8, la dernière étant située au niveau de la poutre ventrale centrale 16.

Dans un autre exemple de réalisation, on ne referme pas le logement 13 par une poutre centrale 16. De même, dans le cas où la voilure 9 est située en partie haute de la section centrale de fuselage 8, il n'est pas nécessaire de refermer le logement 13 par une poutre centrale 16.

L'utilisation d'articulations élastiques 1 dans les dispositifs de fixation selon l'invention permet de réaliser une voilure 9 d'un seul tenant, pour venir la fixer en une seule fois au fuselage 8. Bien entendu, il est également possible de procéder en trois temps, c'est-à-dire d'intégrer le caisson central de voilure 12 au fuselage 8 avant de venir fixer chacune des deux ailes 10, 11. Par ailleurs, la souplesse des articulations élastiques1 , du fait de la présence de la couche d'élastomère 5, 6 autorise des tolérances de montage permettant de rattraper un léger décalage éventuel entre la paroi 15 du fuselage 8 et la voilure 9.

Les articulations élastiques 1 du dispositif de fixation selon l'invention permettent de rendre un système hyperstatique isostatique.

Dans le cadre de la jonction voilure, ces articulations élastiques 1 permettent d'assurer la compatibilité des déformées entre le fuselage 8 et les ailes 10, 11 tout en permettant un assemblage simple et tolérant pour le positionnement. Ces articulations élastiques 1 peuvent aussi avoir un rôle de filtrage vibratoire des hautes fréquences entre le fuselage et la voilure, suite aux vibrations moteur, systèmes et trains notamment.

Comme cela est représenté sur les figures 6 et 7, la jonction élastique 1 est orientée transversalement de manière à ce que l'axe longitudinal de la jonction élastique 1 s'étende selon l'axe Y du repère avion, afin d'avoir une raideur faible en Y et une raideur importante en X et en Z de manière à autoriser une légère translation en Y, de l'ordre de 10 mm et une légère rotation en X, de l'ordre de 1°.

Bien entendu, les rigidités en rotation et translation sont à adapter axialement, radialement et transversalement, selon la destination du dispositif de fixation. Le nombre et la taille des articulations élastiques 1 sont avantageusement fonction des charges qui doivent transiter par ces articulations, qui peuvent changer d'une voilure à une autre, ou d'un empennage horizontal à un autre. Notamment, dans le cas des empennages horizontaux, dans la mesure où la rotation en Y doit être possible, et quasiment nulle en X, on paramètre différemment la rigidité en translation et en rotation des articulations élastiques. De telles adaptations sont aisément réalisables par l'homme du métier.

## Revendications

1. Avion ayant un repère avion comprenant les axes longitudinal, vertical et transversal, l'avion étant muni d'au moins un dispositif de fixation d'un organe de sustentation (9) au fuselage (8) comportant des articulations élastiques (1) dont la rigidité en translation et en rotation est paramétrable axialement (X), verticalement (Z) et transversalement (Y), les articulations élastiques étant des articulations lamifiées, **caractérisé en ce que**
- les articulations sont orientées de manière à ce que l'axe longitudinal (A) des dites articulations s'étende selon l'axe transversal du repère avion, lesdites articulations étant souples transversalement tout en étant de rigidité élevée axialement et verticalement.

2. Avion selon la revendication 1, **caractérisé en ce que** l'organe de sustentation est une voilure (9).

3. Avion selon la revendication 2, **caractérisé en ce que** des articulations élastiques relient les flancs droit et gauche du fuselage respectivement aux ailes droite et gauche (10, 11) de la voilure.

4. Avion selon la revendication 2 ou la revendication 3, **caractérisé en ce que** la voilure est en position basse sur le fuselage.

5. Avion selon la revendication 4, **caractérisé en ce que** des articulations élastiques relient une poutre longitudinale centrale (16) du fuselage au caisson central de la voilure.

6. Avion selon la revendication 2 ou la revendication 3, **caractérisé en ce que** la voilure est en position haute sur le fuselage.

7. Avion selon l'une des revendications 2 à 6, **caractérisé en ce que** la voilure est monobloc.

8. Avion selon l'une des revendications 1 à 7, **caractérisé en ce que** l'organe de sustentation est un empennage horizontal dudit avion.

## Claims

1. An aircraft having an indicating line of the airplane including longitudinal, vertical, and transverse axes, the aircraft being furnished with at least one device for attaching a lift member (9) to the fuselage (8) which comprises elastic articulations (1) whose rigidity in translation and in rotation can be programmed axially (X), vertically (Z), and transversely (Y), the elastic articulations being laminated articulations, **characterized in that**:
- the articulations are arranged such that the longitudinal axis (A) of said articulations extends along the transverse axis of the indicating line of the airplane, said articulations being transversally flexible while being more rigid axially and vertically.

2. An aircraft according to claim 1, **characterized in that** the lift member is a wing structure (9).

3. An aircraft according to claim 2, **characterized in that** the elastic articulations connect the right and left sides of the fuselage respectively to the right and left wings (10, 11) of the wing structure.

4. An aircraft according to claim 2 or claim 3, **characterized in that** the wing structure is in a low position on the fuselage.

5. An aircraft according to claim 4, **characterized in that** the elastic articulations connect a central longitudinal beam (16) of the fuselage to the central box of the wing structure.

6. An aircraft according to claim 2 or claim 3, **characterized in that** the wing structure is in a high position on the fuselage.

7. An aircraft according to one of claims 2 to 6, **characterized in that** the wing structure is a single piece.

8. An aircraft according to one of claims 1 to 7, **characterized in that** the lift member is a horizontal stabilizer of said aircraft.

## Patentansprüche

1. Flugzeug mit einem Flugzeug-Achsenkreuz umfassend die Längsachse, die Vertikalachse und die Querachse, wobei das Flugzeug zumindest mit einer Vorrichtung zum Befestigen eines Auftriebselements (9) am Rumpf (8) mit elastischen Gelenken (1) versehen ist, deren Steifigkeit im Bereich der Translation und der Rotation axial (X), vertikal (Z) und transversal (Y) parametrierbar ist, und die elastischen Gelenke laminierte Gelenke sind, **dadurch gekennzeichnet, dass**
- die Gelenke so ausgerichtet sind, dass sich die Längsachse (A) der besagten Gelenke gemäß einer Querachse des Flugzeug-Achsenkreuzes erstreckt, wobei die besagten Gelenke transversal flexibel sind, und dabei axial und vertikal eine erhöhte Steifigkeit aufweisen.

2. Flugzeug nach Anspruch 1, **dadurch gekennzeichnet, dass** das Auftriebselement eine Tragfläche (9) ist.

3. Flugzeug nach Anspruch 2, **dadurch gekennzeichnet, dass** elastische Gelenke die rechte und linke Flanke des Rumpfes jeweils mit dem rechten und linken Flügel (10, 11) der Tragfläche verbindet.

4. Flugzeug nach Anspruch 2 oder nach Anspruch 3, **dadurch gekennzeichnet, dass** sich die Tragfläche unten am Rumpf befindet.

5. Flugzeug nach Anspruch 4, **dadurch gekennzeichnet, dass** elastische Gelenke einen mittleren Längsträger (16) des Rumpfes mit dem Mittelkasten der Tragfläche verbinden.

6. Flugzeug nach Anspruch 2 oder nach Anspruch 3, **dadurch gekennzeichnet, dass** sich die Tragfläche oben am Rumpf befindet.

7. Flugzeug nach einem der Ansprüche 2 bis 6, **dadurch gekennzeichnet, dass** die Tragfläche in einem Block ausgeführt ist.

8. Flugzeug nach einem der Ansprüche 1 bis 7, **dadurch gekennzeichnet, dass** das Auftriebselement eine horizontale Stabilisierungsfläche des besagten Flugzeugs ist.
